(19) **Europäisches Patentamt**
**European Patent Office**
**Office européen des brevets**

(11) **EP 3 529 781 B1**

(12) **FASCICULE DE BREVET EUROPEEN**

(45) Date de publication et mention de la délivrance du brevet:
**30.10.2024 Bulletin 2024/44**

(21) Numéro de dépôt: **17777279.5**

(22) Date de dépôt: **02.10.2017**

(51) Classification Internationale des Brevets (IPC):
**G06T 19/20** (2011.01)    **G06T 7/30** (2017.01)
**G06T 7/33** (2017.01)

(52) Classification Coopérative des Brevets (CPC):
**G06T 19/20; G06T 7/33;** G06T 2219/2021

(86) Numéro de dépôt international:
**PCT/EP2017/074987**

(87) Numéro de publication internationale:
**WO 2018/077574 (03.05.2018 Gazette 2018/18)**

(54) **PROCÉDÉ D'ÉLABORATION D'UN NUAGE DE POINTS 3D REPRÉSENTATIF D'UNE OREILLE 3D D'UN INDIVIDU, ET SYSTÈME ASSOCIÉ**

VERFAHREN ZUR HERSTELLUNG EINER 3D-STREUKURVE, DIE EIN 3D-OHR EINES INDIVIDUUMS DARSTELLT, UND ZUGEHÖRIGES SYSTEM

METHOD FOR PRODUCING A 3D SCATTER PLOT REPRESENTING A 3D EAR OF AN INDIVIDUAL, AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2016 FR 1660285**

(43) Date de publication de la demande:
**28.08.2019 Bulletin 2019/35**

(73) Titulaire: **Mimi Hearing Technologies GmbH**
**10245 Berlin (DE)**

(72) Inventeurs:
• **YOUNES, Lara**
 **35700 Rennes (FR)**
• **GUEZENOC, Corentin**
 **35000 Rennes (FR)**
• **SEGUIER, Renaud**
 **35690 Acigne (FR)**

(74) Mandataire: **Atout PI Laplace**
**Immeuble Up On**
**25 Boulevard Romain Rolland**
**CS 40072**
**75685 Paris Cedex 14 (FR)**

• **JOHN D BUSTARD ET AL: "3D morphable model construction for robust ear and face recognition", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 June 2010 (2010-06-13), pages 2582 - 2589, XP031725797, ISBN: 978-1-4244-6984-0**
• **CHEN LI ET AL: "A novel 3D ear reconstruction method using a single image", INTELLIGENT CONTROL AND AUTOMATION (WCICA), 2012 10TH WORLD CONGRESS ON, IEEE, 6 July 2012 (2012-07-06), pages 4891 - 4896, XP032270319, ISBN: 978-1-4673-1397-1, DOI: 10.1109/WCICA.2012.6359404**
• **XIUJUAN CHAI ET AL: "Pose Invariant Face Recognition Under Arbitrary Illumination Based on 3D Face Reconstruction", 28 June 2005, AUDIO- AND VIDEO-BASED BIOMETRIC PERSON AUTHENTICATION; [LECTURE NOTES IN COMPUTER SCIENCE;;LNCS], SPRINGER-VERLAG, BERLIN/HEIDELBERG, PAGE(S) 956 - 965, ISBN: 978-3-540-27887-0, XP019013245**

(56) Documents cités:
**WO-A1-2012/028906    US-A1- 2015 170 416**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention porte sur un procédé d'élaboration d'un nuage de points 3D représentatif d'une oreille 3D d'un individu, et système associé.

Les avancées dans les applications de réalité virtuelle, d'acronyme RV, utilisant du matériel embarqué dans l'objectif d'immerger l'utilisateur dans un environnement virtuel sont nombreuses. Une expérience de RV implique simultanément le cerveau humain dans le processus d'interprétation de données visuelles et audio. Ainsi, l'expérience d'immersion ne se limite pas au rendu graphique d'une scène mais implique aussi le rendu de son 3D au casque, essentiel surtout dans des applications de jeux vidéo, de cinéma en RV ou encore dans des simulateurs physiques.

La synthèse binaurale est une technique de rendu de son spatialisé dans un casque audio qui consiste à reproduire les altérations (atténuations, réflexions, diffractions) que subit le signal sonore depuis sa source jusqu'à l'entrée des canaux auditifs. En supposant le sujet statique, de telles altérations peuvent être modélisées pour chaque oreille et chaque direction de l'espace comme un système linéaire et invariant dans le temps, caractérisé par sa fonction de transfert, appelée "Head Related Transfer Function" en langue anglaise et d'acronyme HRTF. Ces altérations du signal étant directement liées à la forme du pavillon de l'oreille, de la tête et du torse, les HRTF sont spécifiques à la morphologie de chaque auditeur.

Il est connu d'obtenir de tels HRTF individuelles par des mesures acoustiques, en plaçant de petits microphones dans les canaux auditifs d'un sujet et en mesurant la réponse impulsionnelle pour des sources sonores réparties dans l'espace autour du sujet. Toutefois, une telle méthode engendre des coûts de mise en oeuvre relativement élevés, notamment par la nécessité d'utiliser une salle anéchoïque ainsi qu'un temps de mesure conséquent, ce qui rend difficile de l'envisager pour une application commerciale.

Une autre approche consiste à acquérir un maillage en trois dimensions ou 3D du buste de l'auditeur et de calculer un jeu d'HRTF au moyen d'une méthode d'éléments frontière, ou "boundary element méthod" en langue anglaise d'acronyme BEM, à partir de ce maillage. Sous réserve d'une géométrie suffisamment précise, cette approche permet d'atteindre des performances de localisation de son spatialisé similaires à celles obtenues par des mesures acoustiques. Cette méthode permet d'envisager des applications commerciales car il est bien plus facile de scanner un utilisateur que de le placer dans une chambre anéchoïque et de l'amener à rester immobile pendant une durée non négligeable de plus de 20 minutes.

Il existe actuellement peu de travaux visant à la reconstruction 3D d'oreilles à partir d'images en deux dimensions ou 2D.

La recherche en vision par ordinateur et en informatique graphique a porté un intérêt spécifique à la reconstruction de visages humains en trois dimensions ou 3D sans apporter de solutions spécifiquement liées à la reconstruction détaillée de la forme d'oreille. Le document John D Bustard et al: "3D morphable model construction for robust ear and face récognition", 2010 IEEE Conférence on Computer Vision and Pattern Recognition (CVPR), 13-18 June 2010, San Francisco, CA, USA, IEEE, Piscataway, NJ, USA, 13 juin 2010 (2010-06-13), pages 2582-2589, ISBN: 978-1-4244-6984-0 divulgue la construction d'un modèle 3D morphable de la tête et de l'oreille, ainsi qu'un classificateur automatique qui permet de construire un tel modèle morphable. Le document CHEN LI ET AL: "A novel 3D ear reconstruction method using a single image", Intelligent Control and Automation (WCICA), 2012 10th World Congree on, IEEE, 6 juillet 2012 (2012-07-06), pages 4891-4896, DOI: 10.1109/WCICA.2012.6359404, ISBN: 978-1-4673-1397-1 divulgue une méthode de correspondance dense qui permet de réaliser des correspondances denses au niveau des pixels sur la base des caractéristiques physiologiques de l'oreille sans choisir d'oreille de référence. Une forme d'oreille en 3D peut être récupérée à partir d'une seule image d'oreille sur la base d'un modèle 3D morphable d'oreille.

Un but de l'invention est de proposer un procédé permettant de construire un maillage en trois dimensions ou 3D d'oreilles d'un individu, de manière à la fois simplifiée et fiable.

Il est proposé, selon un aspect de l'invention, un procédé d'élaboration d'un nuage de points 3D représentatif d'une oreille 3D d'un individu, à partir d'un premier ensemble d'au moins une image 2D de ladite oreille, par utilisation d'un modèle paramétrique ou paramétrable d'oreille 3D.

Ainsi, il est aisé de reconstruire en 3D les oreilles à partir d'images 2D.

Selon un mode de mise en oeuvre, le procédé comprend les étapes consistant à:

- sélectionner, dans chaque image 2D du premier ensemble, un deuxième ensemble d'au moins un point d'intérêt-repère d'une oreille;
- mettre en correspondance, lorsque le premier ensemble comprend au moins deux images 2D, chaque point d'intérêt-repère respectif;
- déterminer, ou recaler, des valeurs des paramètres de pose de l'individu auquel appartient l'oreille lors de la prise de chaque image 2D du premier ensemble, et des valeurs des paramètres du modèle paramétrique d'oreille 3D, à partir du deuxième ensemble d'au moins un point d'intérêt-repère d'une oreille par minimisation d'une fonction de coût par rapport à des erreurs pondérées de distances entre la re-projection estimée d'un vertex 3D dans le modèle paramétrique d'oreille et la localisation du point d'intérêt-repère prédite lui correspondant qui a été détectée dans l'image 2D.

Ainsi, les poids des erreurs pondérées déterminent la contribution de chaque erreur de distance dans le processus de minimisation. Les points d'intérêt-repère les moins fiables quant à leurs localisations dans l'image induiront moins d'erreur lors de l'optimisation.

Dans un mode de mise en oeuvre, la fonction de coût correspond à la somme des erreurs de re-projections pondérées associées aux points d'intérêts-repères.

Selon un mode de mise en oeuvre, la pondération respective d'une erreur de re-projection associée à un point d'intérêt-repère dépend de sa difficulté relative à le trouver.

Les points d'intérêt-repères dans l'image, dont la détection est fiable, sont ceux qui sont localisés sur les contours à fortes courbures de l'oreille interne. Les points de l'oreille externe, sont plus difficilement ajustables à leur localisation anatomique précise sur les contours à faibles courbures dans l'image.

Ainsi le processus de pondération permet de prendre en considération les cas d'occultation de certaines parties de l'oreille dans l'image, annulant ainsi la contribution d'un point d'intérêt-repère si celui-ci n'a pas été retrouvé dans l'image, par exemple.

Selon un mode de mise en oeuvre, plus un point d'intérêt-repère est difficile à trouver, plus la pondération de l'erreur de re-projection qui lui est associée est faible.

Dans un mode de mise en oeuvre, le deuxième ensemble d'au moins un point d'intérêt-repère caractéristique d'une oreille comprend au moins un point du tragus, et/ou au moins un point de l'anti-tragus, et/ou au moins un point de l'helix, et/ou au moins un point de l'anti-hélix.

Ainsi, les caractéristiques de l'oreille interne ainsi que celles de l'oreille externe sont prises en considération pour la reconstruction de la forme de ladite oreille.

Selon un mode de mise en oeuvre, le procédé comprend en outre, une étape consistant à estimer un jeu de fonctions de transfert relatives à la tête adapté à ladite oreille par méthode des éléments de frontière à partir des étapes précédentes.

Ainsi, la méthode permet la personnalisation des fonctions de transfert susmentionnées à partir d'images 2D, facilement accessibles à l'utilisateur lambda.

Il est proposé, selon un autre aspect de l'invention, un système d'élaboration d'un nuage de points 3D représentatif d'une oreille 3D d'un individu, à partir d'un premier ensemble d'au moins une d'image 2D de ladite oreille, par utilisation d'un modèle paramétrique d'oreille 3D, comprenant un calculateur configuré pour mettre en oeuvre le procédé tel que précédemment décrit.

L'invention sera mieux comprise à l'étude de quelques modes de réalisation décrits à titre d'exemples nullement limitatifs et illustrés par les dessins annexés sur lesquels :

- la figure 1 illustre schématiquement des zones caractéristiques d'une oreille ;
- la figure 2 illustre schématiquement un mode de mise en oeuvre du procédé selon un aspect de l'invention; et
- la figure 3 illustre schématiquement un mode de mise en oeuvre du procédé dans le cadre de l'estimation de HRTF, selon un aspect de l'invention.

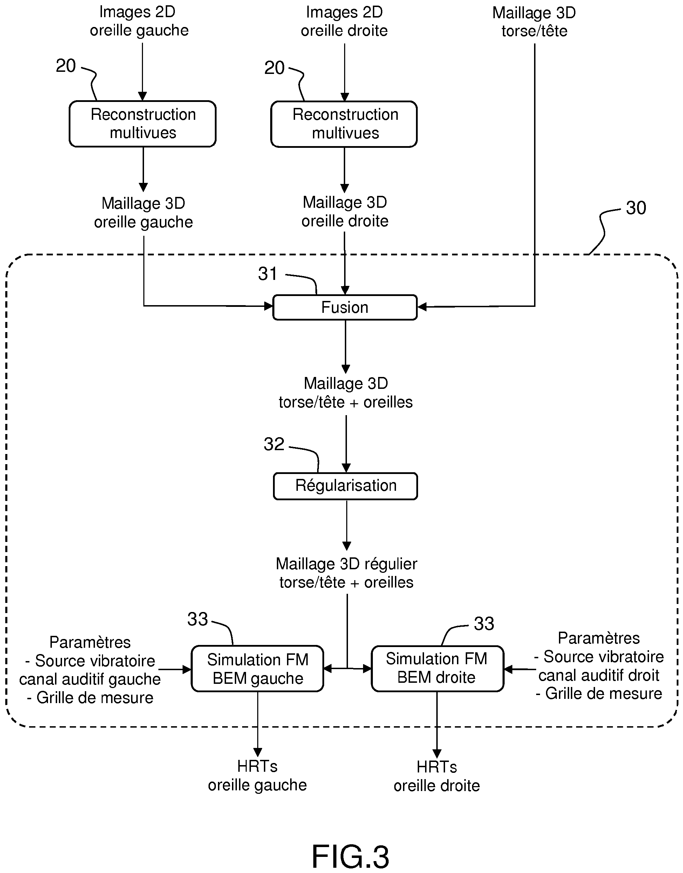

La figure 3 illustre schématiquement un mode de mise en oeuvre d'un procédé 20 dans le cadre de l'estimation de HRTF, selon un aspect de l'invention.

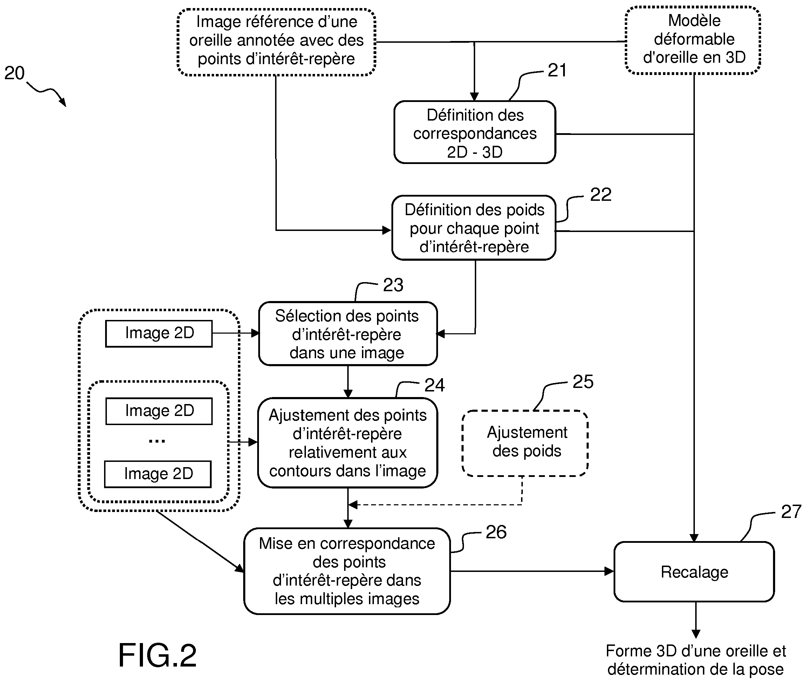

La figure 2 illustre le procédé 20 d'élaboration d'un nuage de points 3D représentatif d'une oreille 3D d'un individu, à partir d'un premier ensemble d'au moins une image 2D de ladite oreille, par utilisation d'un modèle paramétrique d'oreille 3D.

Restituer un relief en reconstruisant la structure 3D d'un objet requiert au moins deux images 2D. Le système de vision humaine établit des relations géométriques par exploitation de correspondances entre des images 2D. La technique "structure à partir de mouvement", ou "structure from motion" en langue anglaise, permet la reconstruction 3D d'un objet simultanément avec la calibration des caméras fournissant les multiples images utilisées. La technique "structure à partir d'ombrage" ou "structure from Shading" en langue anglaise, quant à elle, exploite les illuminations et les ombres dans les images 2D pour la restitution du relief. Ceci nécessite une étude appropriée des propriétés d'illumination et de réflectance (facteur de réflexion), ainsi que des variations des dégradés d'ombres dans les images.

Ces deux techniques permettent une reconstruction des surfaces concaves, et reposent sur le suivi de points représentant des caractéristiques saillantes, comme des contours, des coins ou des zones à intensités de couleur uniformes, extraites à partir du contenu photométrique des images et/ou sur la connaissance de la calibration des caméras. Elles sont robustes dans des applications utilisant des séquences ordonnées d'images ou des vidéos dans lesquelles le suivi de ces informations est possible ou lorsque le processus d'acquisition est contrôlé. Cependant, étant basées principalement sur la texture, elles peuvent échouer dans la reconstruction des détails de certains éléments morphologiques occultés extraites des formes d'oreilles et qui sont liées à l'anatomie de l'oreille. Les méthodes basés modèle sont privilégiées pour ce type de problématique et permettent la reconstruction de la forme complète à partir d'un modèle statistique et de l'analyse du contenu de l'image. Ce type de méthode est adopté dans la présente invention et les éléments anatomiques tel que le tragus, l'antitragus, l'incisure intertragique, ainsi que des points sur les contours de l'helix, le lobe ou lobule et le scapha sont les primitives, dans l'image, utilisées.

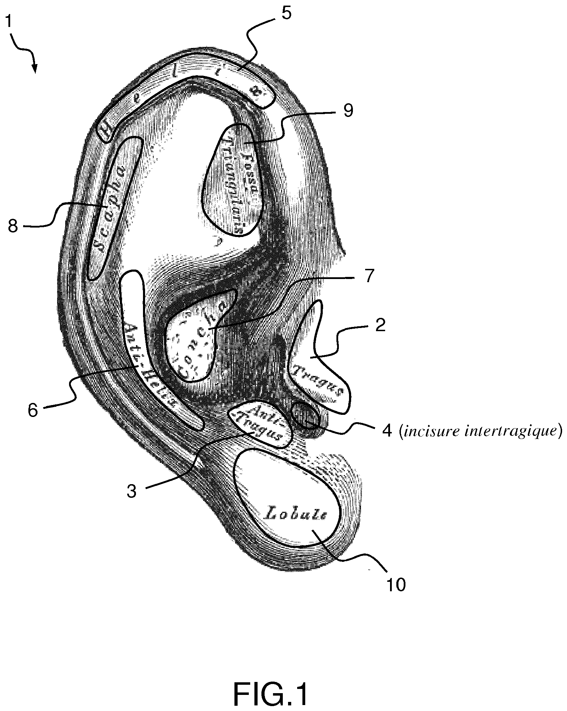

La figure 1 illustre différentes régions caractéristiques d'une oreille 1, comme le tragus 2, l'anti-tragus 3, l'incisure intertragique 4, l'hélix 5, l'anti-hélix 6, la conque 7, la scapha 8, la fosse triangulaire 9, et le lobule ou lobe 10.

Pour une pluralité de sujets, les oreilles 3D reconstruites sont fusionnées avec des données représentant l'ensemble torse/tête, le maillage composite ainsi obtenu est utilisé pour calculer un jeu d'HRTF nommé jeu d'HRTF reconstruit.

La qualité des oreilles reconstruites est ensuite évaluée. Dans un premier temps, une comparaison objective et purement quantitative par comparaison métrique du maillage de l'oreille scannée et du maillage de l'oreille 3D obtenue par reconstruction est effectuée. L'oreille scannée vient de la base de données de formes 3D d'oreilles servant à calculer le modèle paramétrique. Cette comparaison permet d'évaluer la similarité du nuage de points 3D reconstruit par rapport au scan pour juger la qualité de la reconstruction. Il s'agit donc de prouver l'efficacité de la méthode en l'évaluant sur tous les vraies formes 3D d'oreilles des individués qui ont été utilisées pour la construction du modèle paramétrique.

Ensuite est évaluée la qualité de la reconstruction dans le cadre du calcul d'HRTF individualisées. Pour chaque sujet pour lequel a été calculé le jeu d'HRTF reconstruit, trois jeux d'HRTF supplémentaires sont calculés, qui serviront de références pour la comparaison. Ces jeux de référence sont calculés à partir d'autres maillages composites, dans lesquels seules les oreilles sont changées. Ces jeux d'HRTF sont ensuite évalués pour chaque sujet par le biais de tests de localisation de sons spatialisés.

Le modèle déformable ou modèle paramétrique est construit à partir d'une base de données de scans 3D d'oreilles. Dans la présente invention, il s'agit de l'utilisation d'un scanner conçu spécifiquement pour scanner le canal auditif. Le résultat obtenu est un maillage 3D représentant uniquement la forme de l'oreille. Aucune information liée à la texture n'est à disposition. Une opération de nettoyage manuelle est effectuée pour garder des contenus similaires pour tous les maillages exploités. En variante, cette opération de nettoyage peut être effectuée de manière automatique. On entend par opération de nettoyage la sélection de points parmi l'ensemble du nuage de points. Une étape cruciale est nécessaire avant l'analyse en composante principale d'acronyme ACP pour la construction du modèle déformable. Il s'agit d'une mise en correspondance dense d'un maximum de vertex (représentation 3D de coordonnées d'un point) de tous les exemples alignés de la base de données. Ceci est effectué en tenant compte de caractéristiques géométriques locales pour chaque vertex 3D de chaque exemple, dans ce cas la méthode nommée "surface patch histogram of index shape" en langue anglaise, d'acronyme SPHIS. Le modèle est généré par analyse en composantes principales ACP sur les points retenus par la mise en correspondances dense.

Avant de présenter la méthode de recalage du modèle 3D obtenu à partir de points d'intérêt-repère ou "landmarks 2D" en langue anglaise dans une image, nous rappelons la description analytique du modèle déformable d'oreille. Soit M+1 exemples de la base de données alignés par N vertex dans chaque maillage 3D. Le modèle déformable est défini de manière à représenter linéairement une forme par des vecteurs-vertex 3D selon la relation suivante :

$$S_{(3 \times N)} = \bar{S}_{(3 \times N)} + \sum_{j=1}^{M} p_j \cdot S_{j(3 \times N)} \qquad \text{(R1)}$$

dans laquelle:

$S$ représente une forme de N vertex générée à partir du modèle;
$\bar{S}$ représente la forme moyenne calculée sur la base des formes 3D de la base de données;
$S_j$, j variant de 1 à M, représentent les vecteurs propres de déformation du modèle définie à partir de l'ACP; et
$p_j$ représente la pondération associée à chaque vecteur propre.

Ainsi est obtenue une instance du modèle paramétrique.

Chaque vecteur propre correspond à un mode de déformation appliqué à la forme moyenne (une déformation par vertex), définie statistiquement à partir de l'ACP sur les exemples de la base de données.

La présente invention nécessite un ensemble de points d'intérêt ou "landmarks" en langue anglaise à localiser sur une image 2D représentant la structure morphologique d'une oreille. Dans un premier temps, dans l'image, la zone correspondant à l'oreille est détectée par la méthode de Viola et Jones décrite dans le document "Rapid object détection using a boosted cascade of simple features" dans Proceedings of the 2001 IEEE Computer Society Conférence on Computer Vision and Pattern Recognition, 2001, CVPR 2001, volume 1, pages I-511-I-518 vol.1, 2001.

Après avoir identifié dans l'image la zone correspondant à l'oreille, on détecte 22 les points d'intérêts souhaités.

Plusieurs approches existent pour la localisation automatisée de points d'intérêt-repère dans les images. Les modèles locaux contraints ou "constrained local models" en langue anglaise d'acronyme CLM effectuent un apprentissage sur des zones ou patches locaux de propriétés de pixels au voisinage de points caractéristiques prédéfinis de l'objet à apprendre pour permettre de prédire, par régression, les paramètres du modèle représentant une forme 2D dans une images et par la suite localiser des points représentant cette forme dans l'image.

Cette approche contrainte à des propriétés locales permet, contrairement aux approches utilisées avant (les modèles actifs d'apparence effectuant l'apprentissage sur l'ensemble des pixels de l'image délimitant la forme à classifier), d'éviter les imprécisions liées aux conditions d'illumination, ou aux occlusions éventuelles dans l'image d'un objet.

D'autres méthodes pour l'extraction de points d'intérêt-repère dans les images 2D peuvent être mises en oeuvre. Il est possible de porter une attention particulière aux méthodes d'extraction de points caractéristiques dans les images 2D d'oreilles notamment utilisées dans des applications de biométrie pour la reconnaissance de personnes à partir d'images de leurs oreilles, comme décrites dans " Ear biometrics : a survey of détection, feature extraction and recognition methods" de A. Pflug and C. Busch, 1(2) :114-129, 2012.

L'extraction de points caractéristiques ou points d'intérêts dans les images 2D n'est pas l'objet de l'invention. On identifie au préalable un ensemble de points d'intérêts, dans une étape 22, par exemple de manière semi-automatique. L'utilisateur est ensuite invité à sélectionner ces caractéristiques dans une image de référence, dans une étape 23. Les points sélectionnés sont ensuite ajustés à la position la plus proche dans l'image déterminant un extremum de courbure sur son voisinage, dans une étape 24. Ceci est inspiré de la propriété inhérente des points d'intérêts définis (au moins un point du tragus, et/ou au moins un point de l'anti-tragus, et/ou au moins un point de l'helix, et/ou au moins un point de l'anti-hélix) nommés points d'intérêts-repères.

Une étape optionnelle 25 permet un ajustement des poids permettant d'annuler les poids associés à des points d'intérêt-repère qui n'ont pas été retrouvés dans l'image à cause d'une occlusion, par exemple

Quand ces points sont annotés dans l'image de référence, leurs correspondants dans les autres vues de l'oreille de la même personne sont identifiés par correspondance basée sur la mesure de corrélations croisées normalisées, dans une étape 26.

Il est proposé une méthode multi-vues pour les recalages et déformation de modèle 3D en vue de la reconstruction de forme 3D d'oreille, comme illustré sur la figure 2. Hypothèse est faite d'une configuration de projection orthographique dans l'image, ou, en d'autres termes une projection suivant la direction orthogonale au plan de l'image. L'acquisition des images 2D d'une oreille est acquise à une distance supérieure à 1 mètre de l'appareil prenant les images 2D.

Soient K points d'intérêt-repère et suivis sur un ensemble de V images d'oreilles d'une personne. Les correspondances 2D-3D sont prédéfinies par association préalable de chaque point d'intérêt-repère au vertex 3D qu'il représente, comme illustré à l'étape 21. Il est d'abord procédé au sous-échantillonnage du modèle déformable dense 3D pour obtenir un sous-modèle contenant exclusivement les vecteurs associés au vertex suivis dans les images 2D. La relation (R1) du modèle est alors réduite à :

$$\hat{\bar{S}}_{(3\times K)} = \hat{\bar{S}}_{(3\times K)} + \sum_{j=1}^{M} p_j . \hat{S}_{j(3\times K)} \qquad (R3)$$

dans laquelle :

$\hat{\bar{S}}_{(3\times K)}$ représente une forme d'oreille, réduite aux seuls K vertex associés aux points d'intérêts-repères, à calculer à partir du sous-modèle;

$\hat{\bar{S}}_{(3\times K)}$ représente la forme moyenne réduite aux seules K vertex associés aux points d'intérêt-repère utilisés pour la reconstruction; et $\hat{S}_{j(3\times K)}$ représente le jème vecteur de déformation réduit aux seules K vertex associés aux points d'intérêt-repère utilisés pour la reconstruction.

Le recalage, en étape 27, s'effectue par optimisation de manière itérative de l'ensemble de paramètres dans l'objectif de minimiser une fonction de coût. Il s'agit de l'erreur de reprojection entre les estimations de projection des vertex du sous-modèle et leurs points d'intérêt-repère correspondants prédits dans les images 2D. Il s'agit ensuite d'optimiser simultanément le vecteur de paramètres $p = [p_{1;...;}p_M]$ pour obtenir la forme de l'oreille en 3D, ainsi que les paramètres de poses $\Theta = \{r_{0(3\times1)}, t_{0(3\times1)}, ... , r_{V(3\times1)}, t_{V(3\times1)}\}$ correspondantes à chacune des V images utilisées.

$r_{j(3\times1)}$ représente le vecteur rotation associé à la pose de la jème image 2D, et $t_{j(3\times1)}$ représente le vecteur translation associé à la pose de la jème image.

La position estimée d'un vertex 3D du sous modèle pour une image pour laquelle la pose associée est $\Theta_j =$

$$l_i = \left[ l_{x_{i_j}}, l_{xy_{i_j}} \right]$$

$\{r_j, t_j\}$ doit être alignée avec le point d'intérêt-repère associé dans la $j^{\text{ème}}$ image 2D. Soit L la matrice de projection orthographique. L'estimation de la projection en 2D du $i^{\text{ème}}$ vertex est un vecteur $s_{ij}$ tel que :

$$s_{i_j} = L\left( p, \Theta_j; \widehat{\overline{S}^i} + \sum_{k=1}^{M} p_k . \widehat{S_k^i} \right) = L\left( p, \Theta_j; \widehat{S^i} \right) = \begin{bmatrix} u_{i_j} \\ v_{i_j} \end{bmatrix} \qquad \text{(R4)}$$

dans laquelle :

*L* représente la projection orthographique;
*p* représente le vecteur comprenant tous les paramètres du modèle associé à la forme à calculer;
$\Theta_j$ représente les paramètres de la pose associée à la $j^{\text{ème}}$ image 2D;
$\widehat{\overline{S}^i}$ représente le $i^{\text{ème}}$ vertex de la forme moyenne;
$p_k$ représente représente le $k^{\text{ème}}$ paramètre associé au $k^{\text{ème}}$ vecteur de déformation du modèle;
$\widehat{S_k^i}$ représente le $i^{\text{ème}}$ vertex du $k^{\text{ème}}$ vecteur de déformation;
$u_{ij}$ représente la coordonnée sur l'axe horizontal de la projection du $i^{\text{ème}}$ vertex dans la $j^{\text{ème}}$ image; et
$v_{ij}$ représente la coordonnée sur l'axe vertical de la projection du $i^{\text{ème}}$ vertex dans la $j^{\text{ème}}$ image.

Le calcul des paramètres de forme et de pose s'effectue par minimisation de l'erreur de reprojection suivante :

$$Argmin(p, \Theta) \sum_{j=1}^{V} \sum_{i=1}^{K} \omega_i . \left( \left( u_{i_j} - l_{x_{i_j}} \right)^2 + \left( v_{i_j} - l_{y_{i_j}} \right)^2 \right) \qquad \text{(R5)}$$

dans laquelle :

Argmin représente la fonction qui détermine les arguments optimaux qui minimisent la fonction en argument;
$l_{x_{i_j}}$ représente la coordonnée sur l'axe horizontal du $i^{\text{ème}}$ point d'intérêt-repère dans la $j^{\text{ème}}$ image;
$l_{y_{i_j}}$ représente la coordonnée sur l'axe vertical du $i^{\text{ème}}$ point d'intérêt-repère dans la $j^{\text{ème}}$ image; et
$\omega_i$ représente le poids accordé à la contribution, dans l'optimisation de l'erreur, liée au $i^{\text{ème}}$ point d'intérêt-repère.

La solution au problème des moindres carrés est par exemple effectuée par la méthode itérative Gauss-Newton. Un poids est accordé à chaque erreur sur les coordonnées *u* et *v* d'un point, dans l'étape 22. Ceci permet de donner moins de contribution à certains points d'intérêt-repère dans l'optimisation. On accorde par exemple un poids de 1 aux points d'intérêt-repère correspondants aux caractéristiques de l'oreille interne. Celles-ci ont une définition morphologique bien définie dans l'anatomie de l'oreille, et leur détection peut être considérée comme fiable car les points d'intérêt-repère appartiennent à des contours à fortes courbures dans l'image 2D. Un moindre poids, par exemple de 0,7 est accordé aux points d'intérêt-repère constituant l'oreille externe. Ces caractéristiques sont plus difficilement ajustables à leur localisation anatomique précise. Leur localisation sur les contours à faibles courbures peut être sujette à des imprécisions.

L'optimisation de la fonction de coût de la relation R5 permet le calcul des paramètres du modèle. Ces paramètres sont utilisés pour la génération, à partir du modèle dense de la relation R1, de la forme 3D de l'oreille. Les poses associées aux différentes vues sont elles aussi retrouvées.

Une fois les deux oreilles d'un sujet reconstruites, on les recolle sur un maillage de son ensemble torse/tête obtenu par reconstruction stéréoscopique. En effet, l'obtention d'un jeu d'HRTF par le biais de simulations numériques de propagation acoustique nécessite un maillage fermé du haut du corps.

Les maillages de buste (torse/tête) de cette étude sont obtenus par reconstruction stéréoscopique, par exemple à partir de 75 photos du sujet. Afin d'éviter au mieux les problèmes posés par les cheveux lors de la reconstruction, les sujets revêtent par exemple un bonnet de bain.

L'assemblage des maillages d'oreilles et de buste est, par exemple, intégralement effectué à l'aide du logiciel libre Meshlab. On aligne dans un premier temps les deux maillages d'oreilles sur le maillage de buste à l'aide de l'outil d'alignement. On retire ensuite les oreilles du maillage de buste, puis on fusionne les trois maillages en un seul. Enfin, l'on comble les béances dans le maillage à l'aide de l'algorithme de reconstruction de surface de Poisson.

Finalement, on uniformise le maillage à l'aide par exemple de l'outil *"Adaptive Remesher"* du logiciel en source libre OpenFlipper. Le maillage final présente une longueur d'arête moyenne d'environ 1,8 mm et une longueur d'arête maximale de 2,9 mm. Ainsi, en se basant sur la règle des six éléments par longueur d'onde, ce maillage peut être utilisé pour des calculs BEM pour des fréquences allant jusqu'à 20 kHz.

Les HRTF sont calculées par méthode des éléments frontières (BEM ou Boundary Element Method en anglais). Afin de garantir l'unicité de la solution à l'équation de Helmholtz qui régit le problème, nous utilisons la formulation de Burton et Miller, telle que décrite dans "The application of integral équation methods to the numerical solution of some exterior boundary-value problems" dans Proceedings of the Royal Society of London A : Mathematical, Physical and Engineering Sciences, volume 323, pages 201-210, The Royal Society, 1971.

En appliquant le principe de réciprocité comme décrit dans le document de Philip McCord Morse et K Uno Ingard, "Theoretical acoustics, Princeton University Press, 1968, nous réduisons drastiquement le temps de calcul.

De plus, on utilise la méthode multipôle rapide multi-niveaux, ou "multilevel fast multipole method" en langue anglaise, d'acronyme FMM, comme décrit dans le document de Wolfgang Kreuzer, Piotr Majdak, et Zhengsheng Chen, "Fast multipole boundary element method to calculate head-related transfer functions for a wide frequency range" dans The Journal of the Acoustical Society of America, 126(3) : 1280-1290, 2009, ce qui permet d'effectuer des simulations jusqu'à 20kHz en un temps raisonnable.

Pour faire ces simulations, il peut être utilisé le logiciel Coustyx d'Ansol.

Afin de calculer les HRTF d'un sujet, on effectue deux simulations aux étapes 33, une pour chaque oreille. Pour chacune de ces simulations, on place des "microphones virtuels" sur une sphère d'un rayon d'un mètre autour du sujet, tout en plaçant une source sonore au fond du canal auditif de l'oreille concernée. Il y a 2522 microphones, répartis tous les 5° pour les azimuts de 0° à 355° et tous les 5° pour des élévations de -90° à 90°. La source sonore est quant à elle un élément de surface vibrant. Cette vibration est définie par les conditions aux bords appliquées à cet élément de surface.

La figure 3 illustre schématiquement un mode de mise en oeuvre du procédé 20 de la figure 2, dans le cadre de l'estimation de HRTF. Le procédé 20 tel que décrit précédemment permet de reconstruire une oreille gauche 3D et une oreille droite 3D, à partir desquelles est effectuée une fusion 31 avec un modèle torse/tête 3D pour obtenir un maillage torse/tête et oreilles 3D qui subit ensuite une régularisation 32 pour obtenir un maillage uniforme. Cette régularisation 32 consiste à remailler la forme 3D de telle manière que le maillage résultant présente des longueurs d'arêtes comprises entre 0.5mm et 3mm.

Le maillage torse/tête et oreilles 3D obtenu permet ensuite, par une étape de simulation 33 de type Méthode des Eléments Frontières dont les paramètres définissent respectivement une source vibratoire dans le canal auditif de l'oreille gauche et une source vibratoire dans le canal auditif de l'oreille droite, ainsi qu'une grille sphérique de points de mesure englobant le maillage, d'obtenir un jeu de HRTFs pour l'oreille gauche et un jeu de HRTFs pour l'oreille droite.

Les étapes du procédé décrit ci-dessus peuvent être effectuées par un ou plusieurs processeurs programmables exécutant un programme informatique pour exécuter les fonctions de l'invention en opérant sur des données d'entrée et générant des données de sortie.

Un programme informatique peut être écrit dans n'importe quelle forme de langage de programmation, y compris les langages compilés ou interprétés, et le programme d'ordinateur peut être déployé dans n'importe quelle forme, y compris en tant que programme autonome ou comme un sous-programme, élément ou autre unité appropriée pour une utilisation dans un environnement informatique. Un programme d'ordinateur peut être déployée pour être exécuté sur un ordinateur ou sur plusieurs ordinateurs à un seul site ou répartis sur plusieurs sites et reliées entre elles par un réseau de communication.

Le mode de réalisation préféré de la présente invention a été décrit. Diverses modifications peuvent être apportées sans s'écarter de la portée de l'invention. Par conséquent, d'autres mises en oeuvre sont dans la portée des revendications suivantes.

## Revendications

1. Procédé d'élaboration d'un nuage de points 3D représentatif d'une oreille 3D (1) d'un individu, à partir d'un premier ensemble d'au moins une image 2D de ladite oreille (1), par utilisation d'un modèle paramétrique d'oreille 3D, comprenant les étapes consistant à:

   - sélectionner (23), dans chaque image 2D du premier ensemble, un deuxième ensemble d'au moins un point d'intérêt-repère d'une oreille;
   - mettre en correspondance (26), lorsque le premier ensemble comprend au moins deux images 2D, chaque point d'intérêt-repère respectif;

- déterminer (27) des valeurs des paramètres de pose de l'individu auquel appartient l'oreille lors de la prise de chaque image 2D du premier ensemble et des valeurs des paramètres du modèle paramétrique d'oreille 3D, à partir du deuxième ensemble d'au moins un point d'intérêt-repère d'une oreille par minimisation d'une fonction de coût par rapport à des erreurs pondérées (22) de distances entre la re-projection estimée d'un vertex 3D dans le modèle paramétrique d'oreille et la localisation du point d'intérêt-repère prédite lui correspondant qui a été détectée dans l'image 2D, la pondération d'un point d'intérêt-repère correspondant à l'oreille interne étant supérieure à la pondération d'un point d'intérêt-repère correspondant à l'oreille externe.

2. Procédé selon la revendication 1, dans lequel la fonction de coût correspond à la somme des erreurs de re-projections pondérées associées aux points d'intérêts-repères.

3. Procédé selon la revendication 2, dans lequel la pondération respective d'une erreur de re-projection associée à un point d'intérêt-repère dépend de sa difficulté relative à le trouver.

4. Procédé selon la revendication 3, dans lequel plus un point d'intérêt-repère est difficile à trouver, plus la pondération de l'erreur de re-projection qui lui est associée est faible.

5. Procédé selon l'une des revendications 1 à 4, dans lequel le deuxième ensemble d'au moins un point d'intérêt-repère caractéristique d'une oreille (1) comprend au moins un point du tragus (2), et/ou au moins un point de l'anti-tragus (3), et/ou au moins un point de l'helix (5), et/ou au moins un point de l'anti-hélix (6).

6. Procédé selon l'une des revendications précédentes comprenant, en outre, une étape consistant à estimer (30) un jeu de fonctions de transfert relatives à la tête adapté à ladite oreille par méthode des éléments de frontière à partir des étapes précédentes.

7. Système d'élaboration d'un nuage de points 3D représentatif d'une oreille 3D (1) d'un individu, à partir d'un premier ensemble d'au moins une image 2D de ladite oreille par utilisation d'un modèle paramétrique d'oreille 3D, comprenant un calculateur configuré pour mettre en oeuvre le procédé selon l'une des revendications précédentes.

**Patentansprüche**

1. Verfahren zum Herstellen einer 3D-Punktwolke, die ein 3D-Ohr (1) einer Person darstellt, aus einem ersten Satz von mindestens einem 2D-Bild des Ohrs (1) durch Verwenden eines parametrischen 3D-Ohrmodells, umfassend die folgenden Schritte:

   - Auswählen (23), in jedem 2D-Bild des ersten Satzes, eines zweiten Satzes von mindestens einem Bezugspunkt von Interesse eines Ohrs;
   - in Beziehung setzen (26), wenn der erste Satz mindestens zwei 2D-Bilder umfasst, eines jeden jeweiligen Bezugspunktes von Interesse;
   - Bestimmen (27) von Werten der Lageparameter der Person, zu der das Ohr gehört, bei der Aufnahme jedes 2D-Bildes des ersten Satzes und von Werten der Parameter des parametrischen 3D-Ohrmodells aus dem zweiten Satz von mindestens einem Bezugspunkt von Interesse eines Ohrs durch Minimieren einer Kostenfunktion in Bezug auf gewichtete Distanzfehler (22) zwischen der geschätzten Reprojektion eines 3D-Scheitelpunktes in dem parametrischen Ohrmodell und der vorhergesagten Lokalisierung des ihm entsprechenden Bezugspunktes von Interesse, die in dem 2D-Bild erkannt wurde, wobei die Gewichtung eines -Bezugspunktes von Interesse, der dem Innenohr entspricht, größer ist als die Gewichtung eines Bezugspunktes von Interesse, der dem Außenohr entspricht.

2. Verfahren nach Anspruch 1, wobei die Kostenfunktion der Summe der gewichteten Reprojektionsfehler entspricht, die den Bezugspunkten von Interesse zugeordnet sind.

3. Verfahren nach Anspruch 2, wobei die jeweilige Gewichtung eines Reprojektionsfehlers, der einem Bezugspunkt von Interesse zugeordnet ist, von seiner relativen Schwierigkeit, ihn zu finden, abhängt.

4. Verfahren nach Anspruch 3, wobei je schwieriger es ist, einen Bezugspunkt von Interesse zu finden, desto geringer die Gewichtung des Reprojektionsfehlers ist, der ihm zugeordnet ist.

**5.** Verfahren nach einem der Ansprüche 1 bis 4, wobei der zweite Satz von mindestens einem charakteristischen Bezugspunkt von Interesse eines Ohrs (1) mindestens einen Punkt des Tragus (2) und/oder mindestens einen Punkt des Antitragus (3) und/oder mindestens einen Punkt der Helix (5) und/oder mindestens einen Punkt der Antihelix (6) umfasst.

**6.** Verfahren nach einem der vorhergehenden Ansprüche, ferner umfassend einen Schritt des Schätzens (30) einer Gruppe von kopfbezogenen Übertragungsfunktionen, die für das Ohr geeignet ist, durch eine Randelementmethode basierend auf den vorhergehenden Schritten.

**7.** System zum Erzeugen einer 3D-Punktwolke, die ein 3D-Ohr (1) einer Person darstellt, aus einem ersten Satz von mindestens einem 2D-Bild des Ohrs durch Verwenden eines parametrischen 3D-Ohrmodells, umfassend einen Computer, der dafür konfiguriert ist, das Verfahren nach einem der vorhergehenden Ansprüche zu vollführen.

**Claims**

**1.** A method for generating a 3D point cloud representative of a 3D ear (1) of an individual, from a first set of at least one 2D image of said ear (1), using a parametric 3D ear model, comprising:

- selecting (23), in each 2D image of the first set, a second set of at least one landmark point of interest of an ear;
- mapping (26), when the first set comprises at least two 2D images, each respective landmark point of interest;
- determining (27) values of the postural parameters of the individual to whom the ear belongs during the capture of each 2D image of the first set and values of the parameters of the parametric 3D ear model, from the second set of at least one landmark point of interest of an ear by minimising a cost function with respect to weighted errors (22) of distances between the estimated reprojection of a 3D vertex in the parametric ear model and the predicted location of the landmark point of interest corresponding thereto as detected in the 2D image, the weighting of a landmark point of interest corresponding to the inner ear being higher than the weighting of a landmark point of interest corresponding to the outer ear.

**2.** The method according to claim 1, wherein the cost function corresponds to the sum of the weighted reprojection errors associated with the landmark points of interest.

**3.** The method according to claim 2, wherein the respective weighting of a reprojection error associated with a landmark point of interest depends on the relative difficulty to find it.

**4.** The method according to claim 3, wherein the more difficult a landmark point of interest is to find, the lower the weighting of the reprojection error that is associated therewith.

**5.** The method according to one of claims 1 to 4, wherein the second set of at least one characteristic landmark point of interest of an ear (1) comprises at least one point of the tragus (2), and/or at least one point of the antitragus (3), and/or at least one point of the helix (5), and/or at least one point of the antihelix (6).

**6.** The method according to one of the preceding claims, further comprising a step of estimating (30) a set of head-related transfer functions that is adapted to said ear using a boundary element method on the basis of the preceding steps.

**7.** A system for generating a 3D point cloud representative of a 3D ear (1) of an individual, from a first set of at least one 2D image of said ear using a parametric 3D ear model, comprising a computer configured to implement the method according to one of the preceding claims.

FIG.1

Modèle déformable d'oreille en 3D

Image référence d'une oreille annotée avec des points d'intérêt-repère

21 Définition des correspondances 2D - 3D

22 Définition des poids pour chaque point d'intérêt-repère

23 Sélection des points d'intérêt-repère dans une image

24 Ajustement des points d'intérêt-repère relativement aux contours dans l'image

25 Ajustement des poids

26 Mise en correspondance des points d'intérêt-repère dans les multiples images

27 Recalage

Forme 3D d'une oreille et détermination de la pose

Image 2D

Image 2D

Image 2D

20

FIG.2

Images 2D
oreille gauche

Images 2D
oreille droite

Maillage 3D
torse/tête

20

Reconstruction
multivues

20

Reconstruction
multivues

Maillage 3D
oreille gauche

Maillage 3D
oreille droite

30

31

Fusion

Maillage 3D
torse/tête + oreilles

32

Régularisation

Maillage 3D régulier
torse/tête + oreilles

33

Paramètres
- Source vibratoire
canal auditif gauche
- Grille de mesure

Simulation FM
BEM gauche

Simulation FM
BEM droite

33

Paramètres
- Source vibratoire
canal auditif droit
- Grille de mesure

HRTs
oreille gauche

HRTs
oreille droite

FIG.3

## RÉFÉRENCES CITÉES DANS LA DESCRIPTION

**Littérature non-brevet citée dans la description**

- 3D morphable model construction for robust ear and face récognition. **JOHN D BUSTARD et al.** 2010 IEEE Conférence on Computer Vision and Pattern Recognition (CVPR), 13-18 June 2010, San Francisco, CA, USA. IEEE, 13 Juin 2010, 2582-2589
- A novel 3D ear reconstruction method using a single image. **CHEN LI et al.** Intelligent Control and Automation (WCICA), 2012 10th World Congree on. IEEE, 06 Juillet 2012, 4891-4896
- Rapid object détection using a boosted cascade of simple features. **VIOLA ; JONES.** Proceedings of the 2001 IEEE Computer Society Conférence on Computer Vision and Pattern Recognition, 2001. CVPR, 2001, vol. 1, I-511-I-518
- **A. PFLUG ; C. BUSCH.** *Ear biometrics : a survey of détection, feature extraction and recognition methods,* 2012, vol. 1 (2), 114-129
- The application of integral équation methods to the numerical solution of some exterior boundary-value problems. Proceedings of the Royal Society of London A : Mathematical, Physical and Engineering Sciences. The Royal Society, 1971, vol. 323, 201-210
- **PHILIP MCCORD MORSE ; K UNO INGARD.** Theoretical acoustics. Princeton University Press, 1968
- **WOLFGANG KREUZER ; PIOTR MAJDAK ; ZHENGSHENG CHEN.** Fast multipole boundary element method to calculate head-related transfer functions for a wide frequency range. *The Journal of the Acoustical Society of America,* 2009, vol. 126 (3), 1280-1290